# EUROPÄISCHE PATENTSCHRIFT

(11) **EP 1 979 860 B1**
(45) Veröffentlichungstag und Bekanntmachung des Hinweises auf die Patenterteilung: **23.12.2009**
(21) Anmeldenummer: 07703197.9
(22) Anmeldetag: 01.02.2007
(51) Int. Cl.: G06K 19/06, G06K 7/14

(54) **VERFAHREN ZUR DECODIERUNG VON INFORMATIONEN**
METHOD FOR DECODING DATA
PROCÉDÉ DE DÉCODAGE D'INFORMATIONS

(30) Priorität: 02.02.2006 DE 102006005202
(43) Veröffentlichungstag der Anmeldung: 15.10.2008
(73) Patentinhaber: Hochschule Darmstadt, 64295 Darmstadt (DE)
(72) Erfinder: PFESTORF, Christian, 60594 Frankfurt am Main (DE)
(74) Vertreter: Katscher Habermann Patentanwälte
(86) Internationale Anmeldenummer: PCT/EP2007/000868
(87) Internationale Veröffentlichungsnummer: WO 2007/088054

(56) Entgegenhaltungen:
- EP-A2- 0 564 708
- US-A- 5 612 524
- US-A1- 2002 021 284

## Beschreibung

Die Erfindung betrifft ein Verfahren zur Decodierung von Informationen, die in einer zweidimensionalen Anordnung von Codesymbolmarkierungen auf einem Medium codiert sind, wobei die zweidimensionale Anordnung einen Informationsbereich aufweist, innerhalb dessen die Position jeder Codesymbolmarkierung mit einer festgelegten Information verknüpfbar ist, wobei die zweidimensionale Anordnung Orientierungssymbolmarkierungen aufweist, welche den Informationsbereich festlegen, und wobei die zweidimensionale Anordnung von Codesymbolmarkierungen und von Orientierungssymbolmarkierungen mittels eines Codelesers eingelesen wird.

Mit einer Anordnung von Codesymbolmarkierungen können auf der Oberfläche eines Mediums Informationen so gespeichert werden, dass sie automatisiert erfasst und decodiert werden können. Es sind eine große Zahl von eindimensionalen Anordnungen von Codesymbolmarkierungen, oftmals Barcodes genannt, und zweidimensionale Anordnungen, auch Matrixcodes genannt, bekannt.

Die ersten 8arcodes wurden vor über fünfzig Jahren entwickelt und beschrieben. Mittlerweile sind verschiedene Ausführungen von Barcodes wie auch Matrixcodes länderspezifisch und/oder international normiert und werden umfassend zur Kennzeichnung von Produkten oder ganz allgemein zur Identifikation benutzt. Matrixcodes mit einer zweidimensionalen Anordnung von Codesymbolmarkierungen, die in den meisten Fällen aus dunklen oder hellen Quadraten, bzw. Pixeln bestehen, ermöglichen die Speicherung einer großen Informationsmenge auf einer kleinen Fläche. Mit üblichen Fehlerkorrekturverfahren können dabei unleserliche, bzw. beschädigte Bereiche des Matrixcodes erkannt und die fehlende Information in vielen Fällen ermittelt werden.

Es sind Matrixcodes bekannt (EP 1 523 726 B1), bei welchen die Größe der einzelnen Codesymbolmarkierungen so vorgegeben ist, dass bei dem Einlesen der Matrixcode-Fläche jedes Codesymbol in etwa einem Pixel der beim Einlesen der optischen Auflösung des Lesegerätes und damit der dabei generierten Bilddatei entspricht, um ein einfaches und zuverlässiges Decodieren und Verarbeiten des Matrixcodes zu ermöglichen. Die Größe der Codesymbolmarkierung und damit die Abmessungen des Matrixcodes sind dabei durch die Auflösung des Codelesers vorgegeben und festgelegt. Eine Variation der Codesymbolmarkierungen oder der von dem Matrixcode bedeckten Fläche ist nicht, oder bzw. nur mit verhältnismäßig großem Aufwand möglich.

Aus US 2002/021284 A1 ist ein Matrixcode bekannt, bei dem ausgehend von einem regelmäßigen Gitternetz die Abweichung der einzelnen Codesymbolmarkierungen relativ zu dem zugeordneten Gitterpunkt zur Informationscodierung verwendet wird.

Es sind andere Verfahren zur Decodierung von Matrixcodes bekannt (EP 0 564 708 B1), bei denen der für die Anordnung der Codesymbolmarkierungen vorgesehene Flächenbereich durch Indikationslinien in horizontaler sowie in vertikaler Richtung vorgegeben werden. Derartige Indikationslinien geben einen rechteckigen Bereich für die Codesymbolmarkierungen vor. Durch geeignete Unterteilungsmarkierungen längs der Indikationslinien kann eine Skalierung des Matrixcodes automatisierbar ermittelt und beim Decodieren berücksichtigt werden. Sind die Indikationslinien jedoch teilweise oder vollständig beschädigt oder unleserlich, so kann die von Codesymbolmarkierungen bedeckte Fläche nicht zuverlässig ermittelt und fehlerfrei ausgelesen werden. Die Indikationslinien bedecken nur einen kleinen, am Rand des Matrixcodes gelegenen Flächenbereich. Oftmals auftretende Lesefehler oder Beschädigungen in diesen Bereichen können bei Indikationslinien nicht mit den üblichen Fehlerkorrekturverfahren korrigiert werden, so dass bereits bei kleinen Beschädigungen oder Unleserlichkeiten der Indikationslinien der ansonsten lesbare Matrixcode vollständig unleserlich wird.

Aufgabe der vorliegenden Erfindung ist es demzufolge, ein Verfahren zur Decodierung von Informationen in einer zweidimensionalen Anordnung gemäß der eingangs genannten Gattung so auszugestalten, dass die für Codesymbolmarkierungen vorgesehene Fläche möglichst beliebig gewählt und vorgegeben werden kann und eine möglichst fehlerfreie Decodierung auch dann möglich ist, wenn ein Teilbereich der zweidimensionalen Anordnung unleserlich oder beschädigt ist.

Diese Aufgabe wird erfindungsgemäß dadurch gelöst, dass die Orientierungssymbolmarkierungen in mehreren Reihen und in mehreren Spalten angeordnet sind und ein Gitternetz von Reihenmittellinien und Spaltenmittellinien durch Ermitteln einer Reihenschrittweite und einer Spaltenschrittweite an die eingelesenen Orientierungssymbolmarkierungen angepasst wird und anschließend die eingelesenen Codesymbolmarkierungen jeweils einen Kreuzungspunkt des angepassten Gitternetzes zugeordnet werden, der mit einer festgelegten Information verknüpfbar ist. Durch die frei vorgebbare Anordnung der Orientierungssymbolmarkierungen können sowohl die Abstände zwischen einzelnen Codesymbolmarkierungen als auch die Abmessungen der zweidimensionalen Anordnung der von Codesymbolmarkierungen bedeckten Fläche nahezu beliebig vorgegeben werden. Die entsprechende Fläche muss nicht notwendigerweise rechteckig sein.

Die Orientierungssymbolmarkierungen dienen ausschließlich zur Bestimmung der geometrischen Eigenschaften des Informationsbereichs, in welchem die dort angeordneten Codesymbolmarkierungen eindeutig mit einer festgelegten Information verknüpfbar sind.

Wird eine ausreichend große Anzahl von Orientierungssymbolmarkierungen verwendet, so kann der Informationsbereich auch dann noch zuverlässig ermittelt und bestimmt werden, wenn ein Teil, gegebenenfalls sogar wenn ein überwiegender Anteil der Orientierungssymbolmarkierungen beschädigt ist, nicht eingelesen werden kann oder vollständig fehlt.

Teilweise unleserliche Codesymbolmarkierungen, bzw. die dadurch nicht erfassten Informationen können mit Hilfe von bekannten Fehlerkorrektur-Verfahren sowie durch redundante Informationsspeicherung und -codierung rekonstruiert werden. Derartige Verfahren und Maßnahmen sind im Zusammenhang mit bereits bestehenden Decodierungsverfahren insbesondere für bestehende Matrixcodes hinlänglich beschrieben und bekannt.

Da die Orientierungssymbolmarkierungen nicht mit einer festgelegten Information verknüpfbar sein müssen, kann die Anordnung, bzw. die Ausgestaltung der Orientierungssymbolmarkierungen nahezu beliebig gewählt werden und auch für andere, nicht notwendigerweise mit dem Decodieren der Codesymbolmarkierungen zusammenhängende Zwecke verwendet und daran angepasst werden. So können die Orientierungssymbolmarkierungen beispielsweise so ausgestaltet und angeordnet werden, dass sie für einen Betrachter erkennbar ein Logo, eine Abbildung oder eine ästhetische grafische Gestaltung wiedergeben. Es ist demzufolge auch denkbar, dass der weit überwiegende Anteil der zweidimensionalen Anordnung von Orientierungssymbolmarkierungen bedeckt ist und lediglich in einem vergleichsweise kleinen Informationsbereich oder mit einer geringen Menge von Codesymbolmarkierungen eine entsprechend geringe Informationsmenge codiert ist, bzw. zuverlässig decodiert werden kann, die jedoch für bestimmte Anwendungen ausreichend ist. Über eine für den menschlichen Betrachter wahrnehmbare Bedeutung einer mit den Orientierungssymbolmarkierungen erzeugten grafischen Gestaltung können weitere Informationen übermittelt werden.

Einer Ausgestaltung des Erfindungsgedankens zufolge ist vorgesehen, dass das Gitternetz durch Ermitteln eines Winkels zwischen den Reihenmittellinien und den Spaltenmittellinien an die eingelesenen Orientierungssymbolmarkierungen anpassbar ist. Indem die Reihen und Spalten der Orientierungssymbolmarkierungen in einem Winkel zueinander angeordnet sein können, ist die zweidimensionale Anordnung der Symbolmarkierungen nicht zwingend auf rechtwinklige Gitternetze eingeschränkt. Auf diese Weise kann beispielsweise der Informationsbereich bestmöglich an eine nicht rechteckige Fläche angepasst werden, um die zur Verfügung stehende Fläche vorteilhaft auszunutzen und zum Speichern, bzw. zum Decodieren von einer großen Menge von Informationen zu benutzen. Auch kann durch die Vorgabe eines Winkels zwischen den Reihenmittellinien und den Spaltenmittellinien automatisierbar eine eindeutige Orientierung der zweidimensionalen Anordnung von Symbolmarkierungen ermöglicht werden.

Vorzugsweise ist vorgesehen, dass die Reihenschrittweite und die Spaltenschrittweite unterschiedlich sind und anhand des Verhältnisses der beiden Schrittweiten eine relative Orientierung der zweidimensionalen Anordnung von Informationssymbolmarkierungen ermittelt wird. Unterscheiden sich die beiden Schrittweiten, so kann beispielsweise vorgegeben und bei dem Einlesen der Symbolmarkierungen berücksichtigt werden, dass der Abstand der einzelnen Symbolmarkierungen in horizontaler Richtung größer ist als der Abstand der Symbolmarkierungen in vertikaler Richtung. Unabhängig von der Ausrichtung der einzelnen Symbolmarkierungen relativ zu dem Codeleser kann damit die relative Orientierung und damit die horizontale, bzw. vertikale Ausrichtung der Symbolmarkierungen zuverlässig ermittelt werden.

Die absolute Orientierung der Symbolmarkierungen, die eine eindeutige Zuordnung der eingelesenen Codesymbolmarkierungen mit den ermittelten Kreuzungspunkten des angepassten Gitternetzes und den damit verknüpften Informationen ermöglicht, kann beispielsweise durch die Anordnung der Orientierungspunkte in einer nicht spiegelbildlichen Anordnung etc. vorgegeben werden.

Gemäß einer besonders vorteilhaften Ausgestaltung des Erfindungsgedankens ist vorgesehen, dass die zweidimensionale Anordnung Referenzsymbolmarkierungen aufweist, anhand derer der Informationsbereich bestimmbar ist und ermittelt wird. Werden mehrere Referenzsymbolmarkierungen verwendet, so kann durch die Anzahl und Position der Referenzsymbolmarkierungen die Lage sowie die Größe des Informationsbereichs durch die Referenzsymbolmarkierungen angezeigt und beim Decodieren ermittelt werden. Ist die Größe des Informationsbereichs vorgegeben, so kann bei einer geeigneten Lage des Informationsbereichs bereits eine einzige Referenzsymbolmarkierung ausreichend sein, um beim Decodieren die Lage des Informationsbereichs zuverlässig und eindeutig ermitteln zu können.

Es ist möglich, den Informationsbereich und den Orientierungsbereich innerhalb der zweidimensionalen Anordnung so vorzugeben, dass die beiden Bereiche sich nicht überschneiden. Die Unterscheidung der Symbolmarkierungen in Codesymbolmarkierungen und Orientierungssymbolmarkierungen kann dann allein durch die Zuordnung zu einem der beiden Bereiche erfolgen, so dass eine einheitliche Symbolmarkierung für Codesymbolmarkierungen und Orientierungssymbolmarkierungen möglich ist. Um die zur Verfügung stehende Fläche besser ausnutzen zu können, ist es auch denkbar, die beiden Bereiche überlappend oder identisch vorzugeben und den Unterschied zwischen Codesymbolmarkierungen und Orientierungssymbolmarkierungen durch eine abweichende grafische Gestaltung der Symbolmarkierungen zu kennzeichnen. Die abweichende grafische Gestaltung kann sich beispielsweise in der Form, der Größe oder der Farbe bzw. beliebigen Kombinationen dieser Eigenschaften unterscheiden. Dadurch können die Informationssymbolmarkierungen und die Orientierungssymbolmarkierungen anhand einer jeweils charakteristischen und unterscheidbaren grafischen Gestaltung unterschieden und zugeordnet werden.

Es ist auch möglich, definitionsgemäß vorzugeben, dass mehrere Orientierungssymbolmarkierungen in unmittelbarer Nachbarschaft zueinander und im Wesentlichen zusammenhängend angeordnet sein müssen. So könnte vorgegeben sein, dass sämtliche Orientierungssymbolmarkierungen jeweils zu einer benachbarten Orientierungssymbolmarkierung höchstens einen Abstand von wenigen, beispielsweise zwei oder drei Reihen, bzw. Spalten aufweisen dürfen.

Wird im Unterschied dazu vorgegeben, dass Codesymbolmarkierungen nur einzeln und mit einem größeren Abstand zu allen benachbarten Symbolmarkierungen angeordnet sein dürfen, so kann die Menge aller Orientierungssymbolmarkierungen anhand der benachbarten Symbolmarkierungen ermittelt werden, ohne dass eine besondere Kennzeichnung der Orientierungssymbolmarkierungen oder ein vorgegebener , Bereich für die Anordnung der Orientierungssymbolmarkierungen erforderlich wäre. Die Menge und Anordnung der Orientierungssymbolmarkierungen könnte demnach bei der Erzeugung der zweidimensionalen Anordnung von Symbolmarkierungen frei gewählt und nahezu beliebig vorgegeben werden, so dass eine dynamische Anpassung der Symbolmarkierungen an die im Einzelfall zu codierende Information, bzw. zur Verfügung stehende Fläche möglich ist.

Gemäß einer Ausgestaltung des Erfindungsgedankens ist vorgesehen, dass die zweidimensionale Anordnung Datenquellensymbolmarkierungen aufweist, anhand derer eine Datenquelle mit festgelegten Informationen ermittelbar ist, die mit den Kreuzungspunkten des Gitternetzes verknüpfbar sind. Die Datenquellensymbolmarkierung können ebenfalls entweder anhand ihrer Anordnung in einem nicht überlappenden Bereich innerhalb der zweidimensionalen Anordnung oder durch eine abweichende grafische Gestaltung erkannt und ausgewertet werden. So ist es zum Beispiel denkbar, dass innerhalb von Unternehmen, öffentlichen Einrichtungen oder Ländern die festgelegten Informationen jeweils in einer vorgegebenen Datenquelle hinterlegt sind und beim Decodieren der Codesymbolmarkierungen von dem jeweiligen Unternehmen, der öffentlichen Einrichtung oder von einem Land abgerufen werden können.

Nachfolgend wird ein Ausführungsbeispiel des Erfindungsgedankens näher erläutert, welches in der Zeichnung dargestellt ist. Es zeigt:
Fig. 1 eine rechteckige Anordnung von Symbolmarkierungen, deren Reihenschrittweite sich von der Spaltenschrittweite unterscheidet,
Fig. 2 ein Beispiel für eine Anordnung von Orientierungssymbolmarkierungen in einer zweidimensionalen Anordnung gemäß Fig. 1 in Form eines leicht erkennbaren Piktogramms,
Fig. 3 die in Fig. 2 dargestellte Anordnung von Orientierungssymbolmarkierungen mit einer zusätzlichen Referenzsymbolmarkierung und
Fig. 4 die in Fig. 3 dargestellte Anordnung mit zusätzlichen Codesymbolmarkierungen.

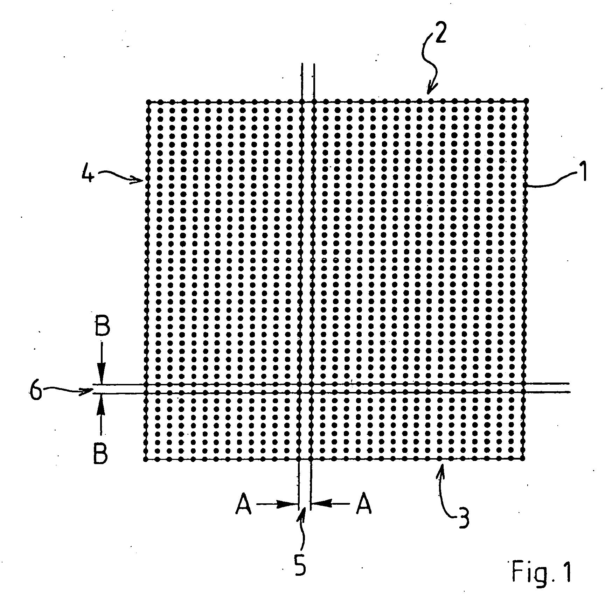

In Fig. 1 ist zur Veranschaulichung eine zweidimensionale Anordnung von Symbolmarkierungen 1 in einem durch die jeweils äußeren Reihen und Spalten der Symbolmarkierungen 1 definierten Rechteck 2 dargestellt. Die einzelnen Symbolmarkierungen 1 sind in rechtwinklig zueinander angeordneten Spalten, lediglich beispielhaft mit Pfeil 3 angedeutet, und Reihen, lediglich beispielhaft mit Pfeil 4 angedeutet, angeordnet. Die in Fig. 1 dargestellte zweidimensionale Anordnung weist 44 Reihen und 33 Spalten auf.

Der Abstand zweier benachbarter Spalten 3 wird als Spaltenschrittweite 5 bezeichnet und ist in Fig. 1 beispielhaft durch die Pfeile A angedeutet. In gleicher Weise wird der Abstand zweier benachbarter Reihen 4 als Reihenschrittweite 6 bezeichnet und ist in Fig. 1 lediglich beispielhaft durch die beiden Pfeile B angedeutet.

Bei dem dargestellten Ausführungsbeispiel ist die Spaltenschrittweite 5 größer als die Reihenschrittweite 6. Das Verhältnis der Spaltenschrittweite 5 zur Reihenschrittweite 6 beträgt bei dem in den Figuren dargestellten Ausführungsbeispiel 2:√2. Es sind natürlich auch andere Verhältnisse der Schrittweiten denkbar, wobei zweckmäßigerweise ein ausreichender Unterschied der Schrittweiten gewählt wird, um eine zuverlässige und fehlerfreie Decodierung der Informationen zu ermöglichen.

Bei dem dargestellten Ausführungsbeispiel ist definitionsgemäß vorgegeben die Spaltenschrittweite 5 größer als die Reihenschrittweite 6, so dass unabhängig von der Leserichtung die horizontale, bzw. vertikale Ausrichtung der Symbolmarkierungen 1 ermittelt und damit eine relative Orientierung der Symbolmarkierungen 1 bestimmt werden kann.

Mit bekannten Verfahren kann bereits anhand weniger Symbolmarkierungen 1 die Spaltenschrittweite 5 sowie die Reihenschrittweite 6 eindeutig ermittelt werden. Bei bekannter Spaltenschrittweite 5 und Reihenschrittweite 6 kann dann ein Gitternetz von Reihenmittellinien und Spaltenmittellinien an die eingelesenen Symbolmarkierungen 1 angepasst werden.

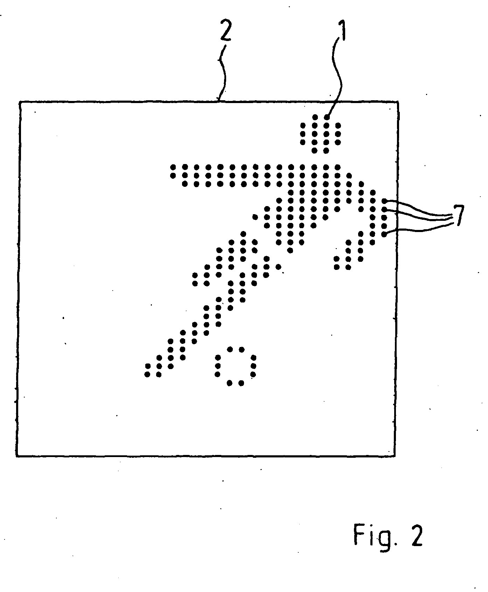

Bei der in Fig. 2 beispielhaft dargestellten Anordnung von Symbolmarkierungen 1 handelt es sich ausschließlich um Orientierungssymbolmarkierungen 7. Die Orientierungssymbolmarkierungen 7 befinden sich innerhalb des maximalen Bereichs der zweidimensionalen Anordnung, wie er in Fig. 1 als Rechteck 2 dargestellt und vorgegeben ist. Für die Bestimmung der Spaltenschrittweite 5 sowie der Reihenschrittweite 6 ist es jedoch nicht erforderlich, dass beispielsweise die genaue Lage des maximalen Bereichs der zweidimensionalen Anordnung von Symbolmarkierungen 1 bereits feststeht. Die Ränder oder beispielsweise die Ecken des maximalen Bereichs müssen nicht durch Orientierungssymbolmarkierungen 7 gekennzeichnet sein.

Da die Orientierungssymbolmarkierungen 7 nicht mit festgelegten Informationen verknüpft sein müssen, kann deren Anordnung beliebig sein. In dem vorliegenden Ausführungsbeispiel sind die Orientierungssymbolmarkierungen 7 in Form eines Piktogramms dargestellt und zeigen für einen menschlichen Betrachter ersichtlich einen Fußballspieler.

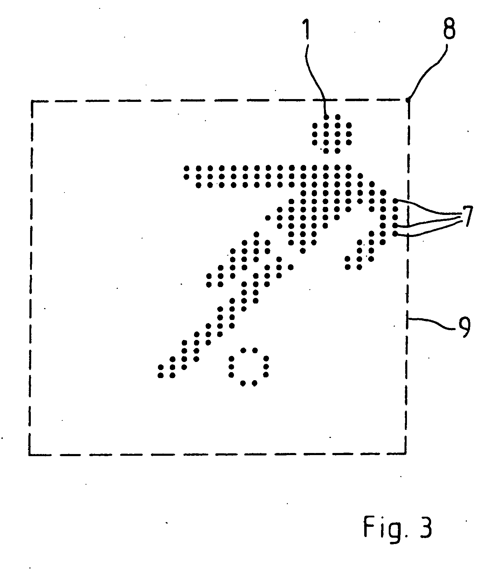

In Fig. 3 ist zusätzlich zu den Orientierungssymbolmarkierungen 7 in der rechten oberen Ecke des maximalen Bereichs der zweidimensionalen Anordnung von Symbolmarkierungen 1 eine Referenzsymbolmarkierung 8 angeordnet. Bei dem gezeigten Ausführungsbeispiel befindet sich die Referenzsymbolmarkierung definitionsgemäß in der rechten oberen Ecke des maximalen Bereichs, müsste jedoch lediglich eindeutig als solche erkennbar und innerhalb des maximalen Bereichs, der eingelesen wird, angeordnet sein.

Mit Hilfe dieser Referenzsymbolmarkierung 8 kann die Orientierung und Ausrichtung der Symbolmarkierungen 1 eindeutig festgelegt, bzw. ermittelt werden. Anhand der bei diesem Ausführungsbeispiel vorgegebenen Größe des Gitternetzes von 33 Spaltenmittellinien und 44 Reihenmittellinien wird durch die Orientierungssymbolmarkierungen 7 sowie die Referenzsymbolmarkierung 8 die Lage und Größe des maximalen Bereichs der zweidimensionalen Anordnung, des Rechtecks 2 eindeutig bestimmt. Der anhand der Referenzsymbolmarkierung ermittelte maximale Bereich der zweidimensionalen Anordnung von Symbolmarkierungen 1 ist in Fig. 3 durch die gestrichelten Linien 9 angedeutet und entspricht dem Rechteck 2.

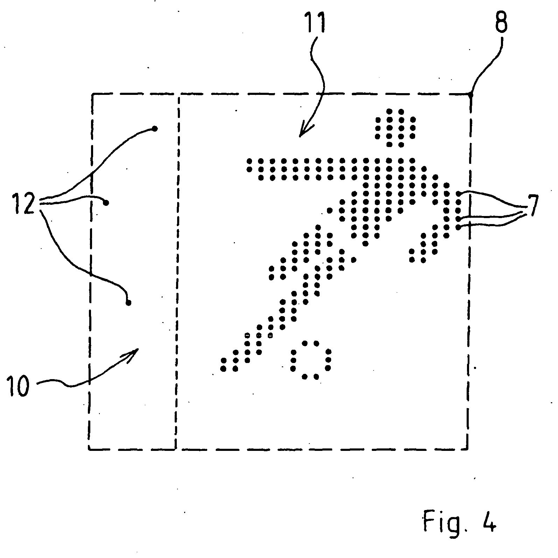

Bei dem dargestellten Ausführungsbeispiel ist der maximale Bereich der zweidimensionalen Anordnung lediglich beispielhaft wie in Fig. 4 dargestellt unterteilt in einen links angeordneten Informationsbereich 10 und einen überlappungsfrei daran anschließenden Orientierungsbereich 11. Der Informationsbereich 10 ist 8 Spalten breit und 44 Reihen hoch. Um eine eindeutige Identifikation der Referenzsymbolmarkierung 8 zu ermöglichen und gleichzeitig eine einheitliche Symbolmarkierung 1 verwenden zu können, werden die unteren Reihen des Informationsbereichs 10 nicht verwendet.

Lediglich beispielhaft sind in dem Informationsbereich 10 drei Codesymbolmarkierungen 12 angeordnet. Die Position der Codesymbolmarkierungen 12 kann eindeutig mit einer festgelegten Information in Verbindung gebracht werden. Dazu werden die Codesymbolmarkierungen 12 den entsprechenden Kreuzungspunkten des nicht dargestellten Gitternetzes zugeordnet, wobei die ermittelte Kombination von drei Kreuzungspunkten des Gitternetzes mit der in einer Datenquelle festgelegten und abrufbaren Information verknüpft ist. In dem gezeigten Ausführungsbeispiel kann eine große Informationsmenge mit nur wenigen Codesymbolmarkierungen 12 codiert und auf eine Oberfläche markiert, bzw. gespeichert werden, wobei von einem menschlichen Betrachter im wesentlichen die piktogrammartige Darstellung des Fußballspielers wahrgenommen wird.

Der Informationsbereich 10 und der Orientierungsbereich 11 können auch überlappend, bzw. identisch innerhalb einer nicht notwendigerweise rechteckigen zweidimensionalen Anordnung von Symbolmarkierungen 1 vorgegeben und angeordnet sein. Die Bedeutung der einzelnen Symbolmarkierungen 1 kann beispielsweise durch Form, Farbe oder Größe unterschieden werden.

Um bei dem exemplarisch beschriebenen Ausführungsbeispiel die gespeicherte Information zu ermitteln, sind die folgenden Verfahrensschritte notwendig:
a) Einlesen aller Symbolmarkierungen 1 und Abspeichern in einer Bilddatei mit einer ausreichenden Auflösung,
b) Rotieren der eingelesenen Bildinformationen, bis , die ermittelten Symbolmarkierungen 1 in Reihen in y-Richtung sowie in Spalten in x-Richtung angeordnet sind,
c) Bestimmen der kleinsten Abstände zwischen Symbolmarkierungen 1 in x-Richtung, bzw. in y-Richtung und Ermitteln des Gitternetzes,
d) Ermittlung der Referenzsymbolmarkierung 8 und Bestimmung des maximalen Bereichs der zweidimensionalen Anordnung, bzw. des Informationsbereichs 10 und des Orientierungsbereichs 11, und
e) Zuordnen der Codesymbolmarkierungen 12 zu Kreuzungspunkten des Gitternetzes und Abfragen der damit verknüpften, auf einer Datenquelle hinterlegten Information.

Es ist abweichend zu dem vorangehend beispielhaft beschriebenen Verfahren auch möglich, in einem ersten Verfahrensschritt die eingelesenen Symbolmarkierungen nicht in eine digitale Bilddatei umzuwandeln und abzuspeichern, sondern vielmehr bereits einzelne Symbole zu identifizieren und die einzelnen Symbolinformationen sowie deren Position in einem komprimierten, für die anschließende Weiterverarbeitung bereits vorbereiteten Datenformat abzuspeichern.

Sowohl die Größe der einzelnen Symbolmarkierungen 1 als auch die Abmessungen des Rechtecks 2, bzw. des Informationsbereichs 10 und des Orientierungsbereichs 11 sind frei wählbar. Das vorliegende Verfahren kann deshalb zur Decodierung von Informationen verwendet werden, wie beispielsweise auch auf einer Visitenkarte oder auf einem großen Plakat aufgedruckt sind. Für den menschlichen Betrachter kann die Anordnung der Orientierungssymbolmarkierungen 7 eine erkennbare Abbildung beispielsweise in Form eines Piktogramms oder eines Bildes ergeben und auf diese Weise zusätzliche Informationen übermittelt oder eine ästhetische Wirkung erzielt werden.

Das vorangehend für die Decodierung von einer zweidimensionalen Anordnung von Symbolmarkierungen beschriebene Verfahren lässt sich auch auf dreidimensionale Anordnungen von Symbolmarkierungen übertragen und anwenden. Um eine höhere Informationsdichte und Speicherkapazität zu ermöglichen ist vorgesehen, dass eine dreidimensionale Anordnung von Symbolmarkierungen in einem vorausgehenden Verfahrensschritt in mehrere nebeneinander angeordnete zweidimensionale Anordnungen von Symbolmarkierungen zu überführt und anschließend decodiert wird.

So könnte jede beliebige dreidimensionale Anordnung von Symbolmarkierungen, die beispielsweise in einem Block aus durchsichtigem Kunststoff oder Kunstharz oder in Form eines Hologramms erzeugt wurde, in einem ersten Verfahrensschritt in eine mehrschichtige Aneinanderreihung von zweidimensionalen Anordnungen von Symbolmarkierungen zerlegt werden, die dann in einer geeigneten Reihenfolge mit dem vorangehend beschriebenen Verfahren decodiert werden können. Die Lage der einzelnen Ebenen der zweidimensionalen Anordnungen innerhalb der dreidimensionalen Anordnung von Symbolmarkierungen könnte beispielsweise ebenfalls über unterschiedliche Schrittweiten der jeweiligen Ebenen in den drei Raumrichtungen vorgegeben und beim Decodieren ermittelt werden.

## Patentansprüche

1. Verfahren zur Decodierung von Informationen, die in einer zweidimensionalen Anordnung von Codesymbolmarkierungen auf einem Medium codiert sind, wobei die zweidimensionale Anordnung einen Informationsbereich aufweist, innerhalb dessen die Position jeder Codesymbolmarkierung mit einer festgelegten Information verknüpfbar ist, wobei die zweidimensionale Anordnung Orientierungssymbolmarkierungen aufweist, welche den Informationsbereich festlegen und wobei die zweidimensionale Anordnung von Codesymbolmarkierungen und von Orientierungssymbolmarkierungen mittels eines Codelesers eingelesen wird, **dadurch gekennzeichnet, dass** die Orientierungssymbolmarkierungen (7) in mehreren Reihen (4) und in mehreren Spalten (3) angeordnet sind und ein Gitternetz von Reihenmittellinien und Spaltenmittellinien durch Ermitteln einer Reihenschrittweite (6) und einer Spaltenschrittweite (5) an die eingelesenen Orientierungssymbolmarkierungen (7) angepasst wird und anschließend die eingelesenen Codesymbolmarkierungen (12) jeweils einem Kreuzungspunkt des angepassten Gitternetzes zugeordnet werden, der mit einer festgelegten Information verknüpfbar ist.

2. Verfahren nach Anspruch 1, **dadurch gekennzeichnet, dass** das Gitternetz durch Ermitteln eines Winkels zwischen den Reihenmittellinien und den Spaltenmittellinien an die eingelesenen Orientierungssymbolmarkierungen (7) anpassbar ist.

3. Verfahren nach Anspruch 1, **dadurch gekennzeichnet, dass** die Reihenschrittweite (6) und die Spaltenschrittweite (5) unterschiedlich sind und anhand des Verhältnisses der beiden Schrittweiten eine relative Orientierung der zweidimensionalen Anordnung von Codesymbolmarkierungen (12) ermittelt wird.

4. Verfahren nach einem der vorangehenden Ansprüche, **dadurch gekennzeichnet, dass** die zweidimensionale Anordnung mindestens eine Referenzsymbolmarkierung (8) aufweist, anhand derer der Informationsbereich (10) ermittelt wird.

5. Verfahren nach einem der vorangehenden Ansprüche, **dadurch gekennzeichnet, dass** die Codesymbolmarkierungen (12) und die Orientierungssymbolmarkierungen (7) anhand einer jeweils charakteristischen, unterscheidbaren grafischen Gestaltung unterschieden und zugeordnet werden.

6. Verfahren nach einem der vorangehenden Ansprüche, **dadurch gekennzeichnet, dass** sämtliche Orientierungssymbolmarkierungen jeweils zu einer benachbarten Orientierungssymbolmarkierung höchstens einen Abstand von wenigen, beispielsweise zwei oder drei Reihen, bzw. Spalten aufweisen.

7. Verfahren nach einem der vorangehenden Ansprüche, **dadurch gekennzeichnet, dass** die zweidimensionale Anordnung Datenquellensymbolmarkierungen aufweist, anhand derer eine Datenquelle mit festgelegten Informationen ermittelbar ist, die mit den Kreuzungspunkten des Gitternetzes verknüpfbar sind.

8. Verfahren nach einem der vorangehenden Ansprüche, **dadurch gekennzeichnet, dass** eine dreidimensionale Anordnung von Symbolmarkierungen in einem vorausgehenden Verfahrensschritt in mehrere nebeneinander angeordnete zweidimensionale Anordnungen von Symbolmarkierungen zu überführt und anschließend decodiert wird.

## Claims

1. Method for decoding information which is coded in a two-dimensional arrangement of code symbol markers on a medium, wherein the two-dimensional arrangement has an information area within which the position of each code symbol marker can be linked to a stipulated piece of information, wherein the two-dimensional arrangement has orientation symbol markers which stipulate the information area and wherein the two-dimensional arrangement of code symbol markers and of orientation symbol markers is read in by means of a code reader, **characterized in that** the orientation symbol markers (7) are arranged in a plurality of rows (4) and in a plurality of columns (3), and a lattice network of row centre lines and column centre lines is matched to the read-in orientation symbol markers (7) by ascertaining a row step size (6) and a column step size (5), and then the read-in code symbol markers (12) are respectively associated with a crossing point in the matched lattice network which can be linked to a stipulated piece of information.

2. Method according to Claim 1, **characterized in that** the lattice network can be matched to the read-in orientation symbol markers (7) by ascertaining an angle between the row centre lines and the column centre lines.

3. Method according to Claim 1, **characterized in that** the row step size (6) and the column step size (5) are different, and the ratio of the two step sizes is used to ascertain a relative orientation for the two-dimensional arrangement of code symbol markers (12).

4. Method according to one of the preceding claims, **characterized in that** the two-dimensional arrangement has at least one reference symbol marker (8) which is used to ascertain the information area (10).

5. Method according to one of the preceding claims, **characterized in that** the code symbol markers (12) and the orientation symbol markers (7) are distinguished and associated using a respective characteristic, distinguishable graphical design.

6. Method according to one of the preceding claims, **characterized in that** all the orientation symbol markers are respectively at a maximum distance of a few, for example two or three, rows, and/or columns, from an adjacent orientation symbol marker.

7. Method according to one of the preceding claims, **characterized in that** the two-dimensional arrangement has data source symbol markers which can be used to ascertain a data source with stipulated information which can be linked to the crossing points in the lattice network.

8. Method according to one of the preceding claims, **characterized in that** a three-dimensional arrangement of symbol markers is converted in a preceding method step into a plurality of adjacently arranged two-dimensional arrangements of symbol markers and is then decoded.

## Revendications

1. Procédé de décodage d'informations codées sur un support selon une disposition bidimensionnelle de marquages symboliques de codes, la disposition bidimensionnelle comportant une plage d'informations à l'intérieur de laquelle la position de chaque marquage symbolique de codes peut être reliée à une information définie, la disposition bidimensionnelle comportant des marquages symboliques d'orientation qui définissent la plage d'informations et la disposition bidimensionnelle de marquages symboliques de codes et de marquages symboliques d'orientation étant enregistrée au moyen d'un lecteur de codes, **caractérisé en ce que** les marquages symboliques d'orientation (7) sont disposés sur plusieurs rangées (4) et sur plusieurs colonnes (3) et qu'on adapte un quadrillage de lignes médianes de rangées et de lignes médianes de colonnes aux marquages symboliques d'orientation (7) enregistrés en déterminant un pas de rangées (6) et un pas de colonnes (5) et qu'on attribue ensuite les marquages symboliques de codes (12) respectifs enregistrés à un point de croisement du quadrillage adapté qui peut être relié à une information définie.

2. Procédé selon la revendication 1, **caractérisé en ce que** le quadrillage peut être adapté aux marquages symboliques d'orientation (7) enregistrés en déterminant un angle entre les lignes médianes de rangées et les lignes médianes de colonnes.

3. Procédé selon la revendication 1, **caractérisé en ce que** le pas des rangées (6) et le pas des colonnes (5) sont différents et qu'on détermine une orientation relative de la disposition bidimensionnelle de marquages symboliques de codes (12) à partir du rapport des deux pas.

4. Procédé selon une des revendications précédentes, **caractérisé en ce que** la disposition bidimensionnelle comporte au moins un marquage symbolique de référence (8) permettant de déterminer la plage d'informations (10).

5. Procédé selon une des revendications précédentes, **caractérisé en ce que** les marquages symboliques de codes (12) et les marquages symboliques d'orientation (7) se distinguent et sont attribués en se fondant respectivement sur un graphisme caractéristique discernable.

6. Procédé selon une des revendications précédentes, **caractérisé en ce que** tous les marquages symboliques d'orientation présentent respectivement vis à vis d'un marquage symbolique d'orientation voisin, une distance maximum de quelques, par exemple deux ou trois, rangées ou colonnes.

7. Procédé selon une des revendications précédentes, **caractérisé en ce que** la disposition bidimensionnelle comporte des marquages symboliques de la source de données permettant de déterminer une source de données avec des informations définies qui peuvent être reliées aux points de croisement du quadrillage.

8. Procédé selon une des revendications précédentes, **caractérisé en ce qu'**une disposition tridimensionnelle de marquages symboliques est transformée dans une étape précédente du procédé, en plusieurs dispositions bidimensionnelles de marquages symboliques, et décodée ensuite.
